# EUROPÄISCHE PATENTSCHRIFT

(11) **EP 2 955 086 B1**
(45) Veröffentlichungstag und Bekanntmachung des Hinweises auf die Patenterteilung: **28.02.2018**
(21) Anmeldenummer: 14172383.3
(22) Anmeldetag: 13.06.2014
(51) Int. Cl.: B62D 33/027, B60J 5/10

(54) **Nutzfahrzeugaufbau mit schwenkbarem Bordwandelement**
Commercial vehicle structure with pivoting side wall element
Montage d'un véhicule utilitaire doté d'élément de hayon pivotant

(43) Veröffentlichungstag der Anmeldung: 16.12.2015
(73) Patentinhaber: Schmitz Cargobull AG, 48341 Altenberge (DE)
(72) Erfinder: Scholz, Volker, 48341 Altenberge (DE)
(74) Vertreter: Cohausz & Florack

(56) Entgegenhaltungen:
- BE-A5- 1 018 841
- DE-A1-102005 040 826
- DE-B3-102006 041 752
- DE-U1- 8 429 357
- DE-U1-202012 104 195
- DE-U1-202014 100 949

## Beschreibung

Die Erfindung betrifft einen Aufbau eines Nutzfahrzeugs, insbesondere Lastkraftwagens, Anhängers oder Sattelaufliegers, mit wenigstens einer Bordwand, wobei die Bordwand wenigstens eine Tragstruktur und wenigstens ein an der Tragstruktur festgelegtes Bordwandelement umfasst, wobei das Bordwandelement von einer geschlossenen Stellung gegenüber der Tragstruktur in eine geöffnete Stellung verschwenkt werden kann.

Nutzfahrzeuge der genannten Art (DE202014100949U) sind insbesondere solche, die zum Zwecke des Gütertransports über den öffentlichen Straßenverkehr eingesetzt werden. Die Nutzfahrzeuge können dabei selbst motorisch angetrieben sein, wie dies etwa bei Lastkraftwagen der Fall ist. Allerdings können Nutzfahrzeuge auch von einer Zugmaschine gezogen werden, wobei insbesondere Anhänger und Sattelauflieger in Frage kommen. Die Nutzfahrzeuge der genannten Art können Aufbauten aufweisen, die ganz oder teilweise einen Laderaum des Nutzfahrzeugs umschließen. Dabei kommen insbesondere Pritschenaufbauten, und zwar solche mit einer Bordwand, in Frage. Die Bordwände sichern die Ladung gegenüber einem versehentlichen Herunterrutschen vom Nutzfahrzeug.

Um das Nutzfahrzeug einfach be- und entladen zu können, weisen die Bordwände Bordwandelemente auf, die an Tragstrukturen festgelegt sowie um diese herum in eine geöffnete Stellung geschwenkt werden können. In der geöffneten Stellung geben die Bordwandelemente einen Teil der Bordwand zum Be- und Entladen des Nutzfahrzeugs frei. Dabei können die Bordwände auf sehr unterschiedliche Arten ausgebildet sein und dabei beispielsweise auf länderspezifische Besonderheiten Rücksicht nehmen. Zudem können die Bordwände sowohl eine Seitenwand, eine Rückwand und/oder eine Stirnwand bilden.

So sind Bordwände bekannt, die nur etwa maximal ein bis zwei Meter über den Ladeboden des Nutzfahrzeugs hinaus nach oben reichen. Derartige Bordwände weisen oft ein Bordwandelement oder auch mehrere die Bordwand segmentierende Bordwandelemente auf, wobei das wenigstens eine Bordwandelement mit seinem unteren Ende über Scharniere mit einer Tragstruktur in Form eines Außenrands des Ladebodens verbunden ist. Die Bordwandelemente werden dann zum Öffnen der Bordwand um die Scharniere herum nach unten geschwenkt.

Es sind aber auch Bordwände bekannt, bei denen die Bordwandelemente über Scharniere an Tragstrukturen in Form von Rungen festgelegt sind und um die Rungen herum in die geöffnete Stellung geschwenkt werden. Derartige Bordwände können mehrere Bordwandelemente übereinander und/oder nebeneinander aufweisen. Bei den Rungen handelt es sich dann um Eckrungen an den Ecken des Ladebodens und/oder um dazwischen angeordnete Rungen. Zudem können die Bordwandelemente durchgängig geschlossen oder leiterförmig, also mit durchgehenden Öffnungen, ausgebildet sein.

Nachteilig an den bekannten Bordwänden ist, dass diese recht tief sind, also eine erhebliche Erstreckung senkrecht zu den Bordwänden aufweisen. Die für die Ladung zur Verfügung stehende Breite und/oder Länge des Laderaums wird dadurch eingeschränkt. Dies ist insbesondere deshalb von Bedeutung, weil die Nutzfahrzeuge eine bestimmte Maximalbreite und/oder Maximallänge einhalten müssen, um ohne Ausnahmegenehmigung im öffentlichen Straßenverkehr bewegt werden zu dürfen.

Der vorliegenden Erfindung liegt daher die Aufgabe zugrunde, den eingangs genannten und zuvor näher beschriebenen Aufbau derart auszugestalten und weiterzubilden, dass der für die Ladung zur Verfügung stehende Raum vergrößert werden kann.

Diese Aufgabe ist bei einem Aufbau nach dem Oberbegriff von Anspruch 1 dadurch gelöst, dass in der geöffneten Stellung des Bordwandelements das Bordwandelement die Tragstruktur wenigstens teilweise umgreift.

Die Erfindung hat erkannt, dass Tragstrukturen weiter nach außen verschoben werden können, wenn die Bordwandelemente die Tragstrukturen wenigstens teilweise umgreifen. Im Stand der Technik sind die Bordwandelemente meist an den Außenseiten der Tragstrukturen angebracht, damit die Bordwandelemente aus der geschlossenen Stellung um einen möglichst großen Winkel in die geöffnete Stellung geschwenkt werden können. Es wird bei entsprechenden Aufbauten nämlich grundsätzlich nicht toleriert, dass die Bordwandelemente in der geöffneten Stellung zu weit nach außen ragen. Dies wäre zwar zulässig, weil die Nutzfahrzeuge nicht mit geöffneten Bordwandelementen im öffentlichen Straßenverkehr bewegt werden. Allerdings würde das Be- und Entladen der Nutzfahrzeuge so behindert werden.

Wenn das wenigstens eine Bordwandelement des Nutzfahrzeugs so ausgebildet ist, dass es die das Bordwandelement tragende Tragstruktur in der geöffneten Stellung wenigstens teilweise umgreift, kann die Tragstruktur weiter nach außen verschoben bzw. positioniert werden, ohne dass dadurch der Öffnungswinkel des Bordwandelements in der geöffneten Stellung nennenswert beeinträchtigt wird. Das Bordwandelement kann dann nämlich teilweise um die Tragstruktur, also insbesondere um deren nach außen weisende Vorderseite herum geschwenkt werden. Letztlich muss das wenigstens eine Bordwandelement nicht außen auf die Tragstruktur montiert werden. Das Bordwandelement kann vielmehr eine eher seitliche Position bezogen auf die Tragstruktur einnehmen.

Bei einer ersten besonders bevorzugten Ausgestaltung des Aufbaus weist das Bordwandelement einen mit der Tragstruktur verbundenen Verbindungsabschnitt, einen Bordwandabschnitt und dazwischen einen Aufnahmeabschnitt auf. Der Aufnahmeabschnitt kann dann dazu dienen, wenigstens einen Teil der Tragstruktur aufzunehmen, wenn das Bordwandelement in die geöffnete Stellung verschwenkt wird und dabei den entsprechenden Teil der Tragstruktur umgreift. Die im geschlossenen Zustand des Bordwandelements zur Außenseite des Nutzfahrzeug weisende Vorderseite des Aufnahmeabschnitts ist dabei vorzugsweise gegenüber der nach außen weisenden Vorderseite des Bordwandelements, der Bordwand und/oder des Bordwandabschnitts in Richtung des Laderaums zurückversetzt. Auf diese Weise wird in konstruktiv einfacher Weise Raum zur Aufnahme eines Teils der Tragstruktur im Aufnahmeabschnitt geschaffen, wenn das Bordwandelement in die geöffnete Stellung geschwenkt wird. Demnach bietet es sich an, wenn in der geöffneten Stellung des Bordwandelements das Bordwandelement die Tragstruktur im Bereich des Aufnahmeabschnitts wenigstens teilweise umgreift. Dies stellt letztlich eine funktionale und zugleich einfache konstruktive Maßnahme dar.

In diesem Zusammenhang bietet es sich weiter an, wenn der Aufnahmeabschnitt des Bordwandelements als Verjüngung und/oder Aussparung ausgebildet ist. Dies ist konstruktiv einfach und erlaubt zudem eine gute Stabilität des Bordwandelements sowie eine zweckmäßige Aufnahme eines Teils der Tragstruktur im Aufnahmeabschnitt. Dabei kann es bei geeigneter Ausgestaltung der Tragstruktur bevorzugt sein, wenn der Aufnahmeabschnitt als Nut ausgebildet ist, deren Öffnung im geschlossenen Zustand des Bordwandelements nach außen weist.

Alternativ oder zusätzlich kann das Bordwandelement derart an der Tragstruktur montiert sein, dass die Tragstruktur in der geschlossenen Stellung des Bordwandelements gegenüber der zum Laderaum des Nutzfahrzeugs weisenden Rückseite des Bordwandelements vorsteht und zwar in der vom Nutzfahrzeug wegweisenden Richtung, die vorzugsweise senkrecht zur Bordwand verläuft. Dann ist die Tragstruktur von außen betrachtet nicht hinter dem Bordwandelement positioniert, was sich günstig auf die Tiefe der Bordwand und damit auf die Abmessungen des Laderaums auswirkt.

Dabei ist es weiter bevorzugt, wenn das Bordwandelement in der geschlossenen Stellung nicht gegenüber der Außenseite der Tragstruktur nach außen vorsteht. Dann kann verhindert werden, dass das Bordwandelement zur Dicke der Bordwand beiträgt. Somit kann mehr Laderaum bereitgestellt werden. Besonders effizient hinsichtlich der Ausnutzung des zur Verfügung stehenden Raums, kann es sein, wenn das Bordwandelement etwa bündig mit der Tragstruktur abschließt.

Alternativ oder zusätzlich kann vorgesehen sein, dass in der geöffneten Stellung des Bordwandelements die Tragstruktur gegenüber der zum Laderaum des Nutzfahrzeugs weisenden Vorderseite der Bordwand zur Außenseite des Nutzfahrzeugs vorsteht. Auf diese Weise wird erreicht, dass das Bordwandelement aus der geschlossenen Stellung um einen sehr großen Winkel in Richtung der geöffneten Stellung verschwenkt werden kann, so dass das Bordwandelement beim Beladen und Entladen weniger stört.

In diesem Zusammenhang ist es bevorzugt, wenn das Bordwandelement aus der geschlossenen Stellung um wenigstens 150° in die geöffnete Stellung verschwenkt werden kann. Dies wird durch ein teilweises Umgreifen der Tragstruktur durch das Bordwandelement ermöglicht, während die Tragstruktur gleichzeitig weiter nach außen verschoben wird. Ein leichteres Entladen und Beladen kann erreicht werden, wenn das Bordwandelement aus der geschlossenen Stellung um wenigstens 160°, besser noch um wenigstens 170°, in die geöffnete Stellung geschwenkt werden kann. Damit das Nutzfahrzeug auch bei geöffnetem Bordwandelement möglichst platzsparend abgestellt werden kann, kann das Bordwandelement bei einem besonders bevorzugten Aufbau aus der geschlossenen Stellung im Wesentlichen um 180° in die geöffnete Stellung geschwenkt werden.

Je nach Ausgestaltung des Aufbaus kann es günstig sein, wenn das Bordwandelement aus der geschlossenen Stellung in die geöffnete Stellung nach unten und/oder zur Seite geschwenkt wird. Ist das untere Ende des Bordwandelements nahe des Ladebodens angeordnet, kann es einfacher sein, das Bordwandelement nach unten anstatt zur Seite zu verschwenken. Reicht das Bordwandelement jedoch in der geschlossenen Stellung vom Ladeboden weit nach oben, kann es günstiger sein, das Bordwandelement zur Seite in die geöffnete Stellung zu schwenken. Wenn das Bordwandelement weit oben angeordnet ist und das untere Ende des Bordwandelements einen großen Abstand zum Ladeboden aufweist, kann der Zugang zum Laderaum vereinfacht werden, wenn das Bordwandelement zur Seite verschwenkt wird.

Um eine möglichst platzsparende Ausgestaltung der Bordwand zu erreichen, kann das Bordwandelement, insbesondere der Verbindungsabschnitt, mit einer im Wesentlichen in Richtung der Bordwand oder im Wesentlichen nach oben weisenden Seite der Tragstruktur verbunden sein. In beiden Fällen weist die entsprechende Seite der Tragstruktur vorzugsweise in eine Richtung im Wesentlichen parallel zur Bordwand mit dem wenigstens einen Bordwandelement in der geschlossenen Stellung und nicht in etwa im Wesentlichen nach außen. Das Bordwandelement ist dann nicht von außen auf die Tragstruktur aufgebracht, was eine größere Tiefe der Bordwand nach sich ziehen kann.

Die Bordwand bildet eine Seitenwand. Auf diese Weise kann an der Seitenwand eine einfache Bordwand vorgesehen sowie das einfache Be- und Entladen sichergestellt werden.

Konstruktiv besonders einfach aber dennoch stabil und langlebig kann die Verbindung zwischen dem Bordwandelement und der Tragstruktur ausgebildet werden, wenn das Bordwandelement über wenigstens ein Scharnier mit der Tragstruktur verbunden ist. Für eine gesteigerte Stabilität ist es jedoch regelmäßig bevorzugt, wenn wenigstens zwei Scharniere vorgesehen sind.

Zum seitlichen Verschwenken des Bordwandelements kann die Tragstruktur der Einfachheit halber eine Runge, bedarfsweise eine Eckrunge, sein. Zum Verschwenken des Bordwandelements nach unten ist jedoch regelmäßig eine Tragstruktur in Form des Ladebodens, des äußeren Rands des Ladebodens und/oder eines Längsprofils zu bevorzugen.

Die zuvor genannten Vorteile kommen grundsätzlich umso mehr zur Geltung, wenn der Aufbau ein Pritschenaufbau, insbesondere ein offener Pritschenaufbau ist. Diese weisen nämlich entsprechende Bordwandelemente, bedarfsweise in großer Anzahl, auf. In vielen Fällen umfassen die Aufbauten darüber hinaus nur noch wenige zusätzliche Elemente.

Nachfolgend wird die Erfindung anhand einer lediglich Ausführungsbeispiele darstellenden Zeichnung näher erläutert. In der Zeichnung zeigt,
- Fig. 1: ein Nutzfahrzeug mit einem erfindungsgemäßen Aufbau in einer Seitenansicht,
- Fig. 2: das Detail II des Aufbaus aus Fig. 1 mit dem Bordwandelement in der geschlossenen Stellung in einer perspektivischen Ansicht,
- Fig. 3: das Detail II des Aufbaus aus Fig. 1 mit dem Bordwandelement in der geöffneten Stellung in einer perspektivischen Ansicht,
- Fig. 4: das Detail IV des Aufbaus aus Fig. 1 mit dem Bordwandelelement in der geschlossenen Stellung in einer vertikalen Schnittansicht quer zum Aufbau und
- Fig. 5: das Detail IV des Aufbaus aus Fig. 1 mit dem Bordwandelelement in der geöffneten Stellung in einer vertikalen Schnittansicht quer zum Aufbau.

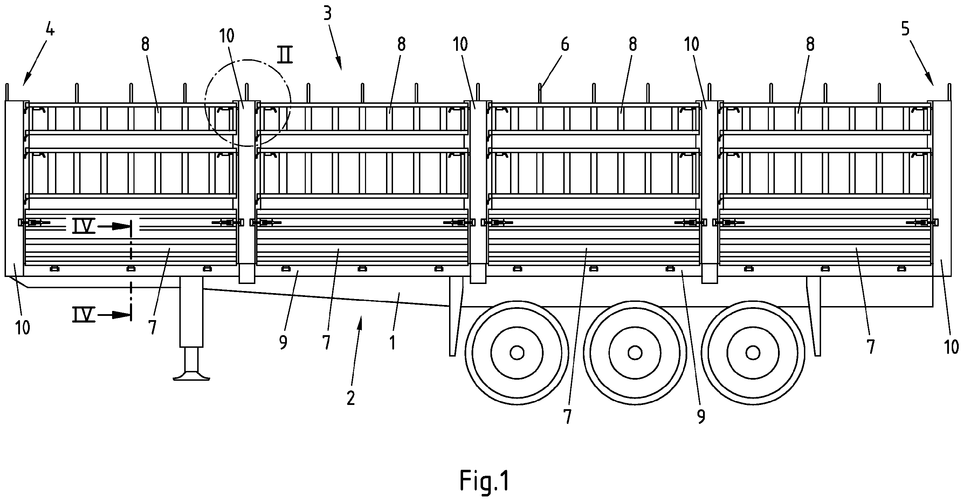

In der Fig. 1 ist ein Nutzfahrzeug 1 in Form eines Sattelaufliegers dargestellt. Das Nutzfahrzeug 1 weist einen Aufbau 2 in Form eines Pritschenaufbaus auf, der Bordwände 3 auf beiden Längsseiten sowie eine Stirnwand 4, eine Rückwand 5 und ein die beiden Bordwände 3 verbindendes Dach 6 umfasst. Beim dargestellten und insoweit bevorzugten Aufbau 2 weist jede Bordwand 3 mehrere in Längsrichtung des Nutzfahrzeugs 1 nebeneinander und in vertikaler Richtung übereinander angeordnete Bordwandelemente 7,8 auf, die jeweils an einer Tragstruktur 9,10 gehalten sind. Bei diesen Tragstrukturen 9,10 handelt es sich um den Ladeboden, um ein Längsprofil des Ladebodens an dessen seitlichem Rand, und/oder um vertikal ausgerichtete Rungen. Bei den vorderen und hinteren Rungen jeder Bordwand handelt es sich um sogenannte Eckrungen an den äußeren Ecken des Ladebodens. Zwischen den Eckrungen sind weitere Rungen vorgesehen.

Die Bordwandelemente 7 der unteren Reihe von Bordwandelementen 7 sind schwenkbar mit dem Ladeboden als Tragstruktur 9 verbunden und können zum Beund Entladen des Nutzfahrzeugs 1 aus der dargestellten geschlossenen Stellung nach unten in die geöffnete Stellung geschwenkt werden. In der geschlossenen Stellung sind die unteren Bordwandelemente 7 zu beiden Seiten mit den angrenzenden Tragstrukturen 10 in Form von Rungen lösbar verriegelt. Diese Verriegelung muss gelöst werden, um die Bordwandelemente 7 in die untere geöffnete Stellung schwenken zu können.

Die Bordwandelemente 8 der oberen beiden Reihen von Bordwandelementen 8 sind jeweils über Schwenkverbindungen mit einer seitlich angrenzenden Tragstruktur 10 in Form einer Runge verbunden und mit der anderen seitlich angrenzenden Tragstruktur 10 in Form einer Runge lösbar verriegelt. Wenn diese Verriegelung gelöst wird, können die Bordwandelemente 8 um die Schwenkverbindung aus der dargestellten geschlossenen Stellung in die geöffnete Stellung geschwenkt werden. Im weiteren Unterschied zu den unteren Bordwandelementen 7 weisen die darüber vorgesehenen Bordwandelemente 8 keine geschlossene, sondern eine teilweise offene Struktur auf. Beim dargestellten und insoweit bevorzugten Aufbau 2 sind die oberen Bordwandelemente 8 leiterförmig ausgebildet.

Beim dargestellten und insoweit bevorzugten Aufbau 2 des Nutzfahrzeugs 1 könnte grundsätzlich auch auf die oberen beiden Reihen von Bordwandelementen 8 verzichtet werden. Dann würden die Bordwände 3 zu beiden Längsseiten des Nutzfahrzeugs 1 vorzugsweise auf Höhe der oberen Enden der unteren Bordwandelemente 7 enden. Die Tragstrukturen 10 in Form der Rungen würden dann folglich ebenfalls etwa auf der Höhe der oberen Ränder der unteren Bordwandelemente 7 enden. Zudem wird dann weiter vorzugsweise auf das die Bordwände 3 verbindende Dach 6 verzichtet. Während der Aufbau 2 der in Fig. 1 dargestellten Art als geschlossener Pritschenaufbau bezeichnet werden kann, weil der Laderaum wenigstens im Grundsatz durch den Aufbau zu allen Seiten begrenzt ist, könnte der zuvor beschriebene Aufbau als offener Pritschenaufbau bezeichnet werden, weil der Laderaum vom offenen Pritschenaufbau wenigsten nach oben nicht begrenzt wird. Dann wären zudem vorzugsweise nur Bordwandelemente 7 vorgesehen, die aus der geschlossenen Stellung um den Rand der Tragstruktur 9 in Form des Ladebodens herum nach unten in die geöffnete Stellung geschwenkt werden.

Grundsätzlich wären natürlich auch Aufbauten 2 denkbar, deren Bordwandelemente 8 ausschließlich aus der geschlossenen Stellung zur Seite in die offene Stellung geschwenkt werden, und zwar jeweils etwa um eine Tragstruktur 10 in Form einer Runge herum. In diesem Falle können die entsprechenden Bordwandelemente 8 bedarfsweise in einer Reihe nebeneinander oder in mehreren Reihen übereinander angeordnet sein. Darüber hinaus müssen auf einer Höhe des Aufbaus 2 nicht zwingend mehrere Bordwandelemente 8 nebeneinander angeordnet sein. Es könnte sich auch ein Bordwandelement 8 im Wesentlichen über die gesamte Länge der Bordwand 3 erstrecken. Dies kann sich natürlich nachteilig auf das Handling des Bordwandelements 8 auswirken, weshalb dies eher bei kürzeren Bordwänden 3 der Fall sein wird.

Beim dargestellten und insoweit bevorzugten Aufbau 2 sind die lösbaren Verriegelungen der Bordwandelemente 7,8 an den entsprechenden Tragstrukturen 10 in Form der Rungen im Grundsatz bereits aus dem Stand der Technik bekannt. Deshalb wird auf diese Art der lösbaren Verriegelung im Folgenden nicht näher eingegangen.

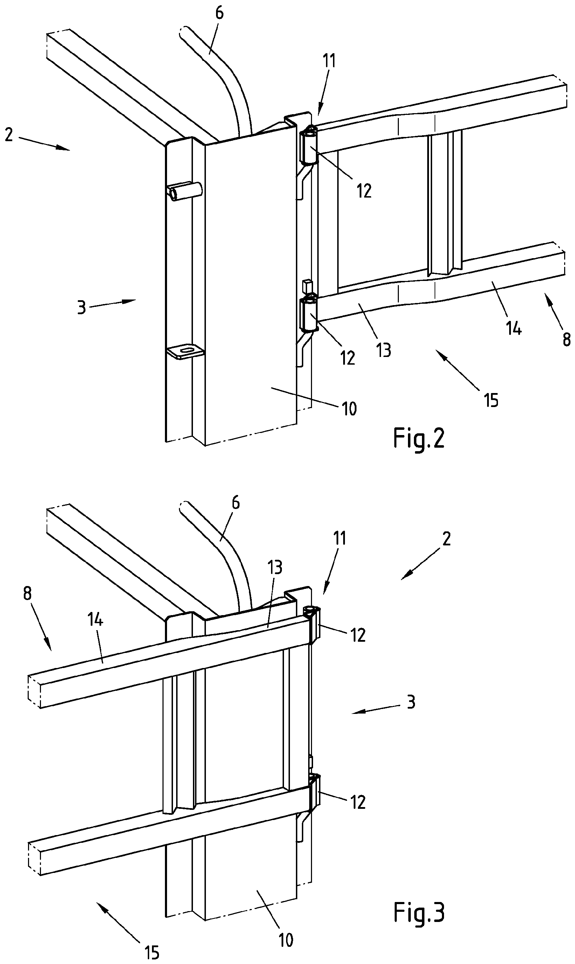

In der Fig. 2 ist ein Teil eines Bordwandelements 8 der oberen Reihe von Bordwandelementen 8 in der geschlossenen Stellung sowie ein Teil einer schwenkbar mit dem Bordwandelement 8 verbundenen Tragstruktur 10 in Form einer Runge dargestellt. Das Bordwandelement 8 weist einen Verbindungsabschnitt 11 auf, der über Schwenkverbindungen 12 in Form von Scharnieren mit der Tragstruktur 10 verbunden ist. Die Schwenkverbindungen 12 sind beim dargestellten und insoweit bevorzugten Aufbau 2 an einer in Längsrichtung des Aufbaus 2 weisenden Seite der Tragstruktur 10 vorgesehen. Zudem stehen die Schwenkverbindungen 12 nicht gegenüber der Tragstruktur 10 zur Außenseite des Aufbaus 2 vor.

In der Längsrichtung des Bordwandelements 8 schließt sich dem Verbindungsabschnitt 12 ein Aufnahmeabschnitt 13 an, der so ausgebildet ist, dass das Bordwandelement 8 aus der geschlossenen Stellung um im Wesentlichen 180° in die geöffnete Stellung geschwenkt werden kann. Der Aufnahmeabschnitt 13 geht zudem in einen Bordwandabschnitt 14 über, der beim dargestellten und insoweit bevorzugten Aufbau 2 den mit Abstand größten Teil des Bordwandelements 8 einnimmt. Der Bordwandabschnitt 14 dient überwiegend dazu, ein Verlieren von Ladung zu verhindern. Nicht dargestellt ist, dass der Bordwandabschnitt 14 am gegenüberliegenden Ende noch Verriegelungsmittel zur lösbaren Verriegelung des Bordwandelements 8 mit der angrenzenden Tragstruktur 10 in Form einer Runge trägt.

In der Fig. 3 ist das Bordwandelement 8 in der geöffneten Stellung dargestellt, in der das Bordwandelement 8 in etwa um 180° gedreht zur geschlossenen Stellung ausgerichtet ist. Beim Schwenken des Bordwandelements 8 aus der geschlossenen Stellung um die Schwenkverbindungen 12 herum in die geöffnete Stellung umgreift das Bordwandelement 8 teilweise die Tragstruktur 10 in Form der angrenzenden Runge. Dies geschieht beim dargestellten und insoweit bevorzugten Bordwandelement 8 im Bereich des Aufnahmeabschnitts 13. Zudem umgreift das Bordwandelement 8 bzw. der Aufnahmeabschnitt 13 des Bordwandelelements 8 die Tragstruktur 10 mit der in der geschlossenen Stellung nach außen weisenden Vorderseite des Bordwandelements 8, die in der geöffneten Stellung in Richtung des Laderaums 15 weist.

Zu diesem Zweck ist die Vorderseite des Aufnahmeabschnitts 13 gegenüber der ebenfalls in der geschlossenen Stellung des Bordwandelements 8 nach außen weisenden Vorderseite des Bordwandabschnitts 14 in Richtung des Laderaums 15 zurückversetzt. Dies wird erreicht, indem sich der Aufnahmeabschnitt 13 beim dargestellten und insoweit bevorzugten Aufbau 2 ausgehend vom Bordwandabschnitt 14 in Richtung des Verbindungsabschnitts 11 verjüngt. Mit anderen Worten definiert die Vorderseite des Bordwandabschnitts 14 eine äußere Ebene, die wenigstens etwa mit der äußeren Ebene der Bordwand 3 zusammenfallen kann. Mit dieser äußeren vertikalen Ebene bildet der Aufnahmeabschnitt 13, der in Bezug zu dieser Ebene eine Aussparung bildet, einen Freiraum, in dem die Tragstruktur 10 in der geöffneten Stellung des Bordwandelements 8 teilweise aufgenommen wird.

Die Vorderseite des Aufnahmeabschnitts 13 muss jedoch nicht zwingend gegenüber der Vorderseite des Bordwandabschnitts 8 in der geschlossenen Stellung nach hinten in Richtung des Laderaums 15 zurückversetzt sein. Es kann letztlich auch gänzlich auf einen Aufnahmeabschnitt 13 verzichtet werden, so dass sich beispielsweise der Bordwandabschnitt 14 direkt an den Verbindungsabschnitt 11 des Bordwandelements 8 anschließt. In diesem Fall ist dann jedoch bevorzugt die nach außen weisende Vorderseite des Bordwandabschnitts 14 gegenüber der nach außen weisenden Vorderseite der Tragstruktur 10 wenigstens abschnittsweise nach hinten in Richtung des Laderaums 15 zurückversetzt. Der Bordwandabschnitt 14 schließt dann vorzugsweise nicht bündig mit der Bordwand 3 als solcher ab. In der geöffneten Stellung ist der Bordwandabschnitt 14 aber dennoch vor der Vorderseite der Tragstruktur 10 an dieser vorbeigeführt, während der Verbindungsabschnitt 11 auch in der geöffneten Stellung gegenüber der Vorderseite der Tragstruktur 10 in Richtung des Laderaums 15 zurückversetzt ist. Dies stellt ebenfalls ein teilweises Umgreifen der Tragstruktur 10 im vorliegenden Sinne dar. Es ist also nicht erforderlich, dass die Vorderseite des Bordwandabschnitts 14 in der geöffneten Stellung des Bordwandelements 8 gegenüber der Vorderseite der Tragstruktur 10 nach hinten in Richtung des Laderaums 15 zurückversetzt ist. Es wird also weniger ein U-förmiges Umgreifen der Tragstruktur 10 als vorzugsweise wenigstens ein L-förmiges Umgreifen der Tragstruktur 10 gefordert.

Während beim dargestellten und insoweit bevorzugten Aufbau 2 die Rückseite des Bordwandelements 8 in der geschlossenen Stellung gegenüber der nach außen weisenden Vorderseite der Tragstruktur 10 in Richtung des Laderaums 15 nach hinten zurückversetzt ist, ist die im geschlossenen Zustand nach außen weisende Vorderseite des Bordwandelements 8 in der geöffneten Stellung gegenüber der Tragstruktur 10 in Richtung des Laderaums 15 nach hinten zurückversetzt. Dies ist beim dargestellten und insoweit bevorzugten Aufbau 2 jedoch nur in einem solchen Umfang der Fall, als dass die Rückseite des Bordwandelements 8 in der geöffneten Stellung noch gegenüber der Tragstruktur nach außen vorsteht. Allerdings steht die Vorderseite des Bordwandelements 8 in der geschlossenen Stellung nicht gegenüber der Tragstruktur 10 nach außen vor. Vielmehr schließt die Vorderseite des Bordwandelements 8 etwa bündig mit der Außenseite der Tragstruktur 10 ab.

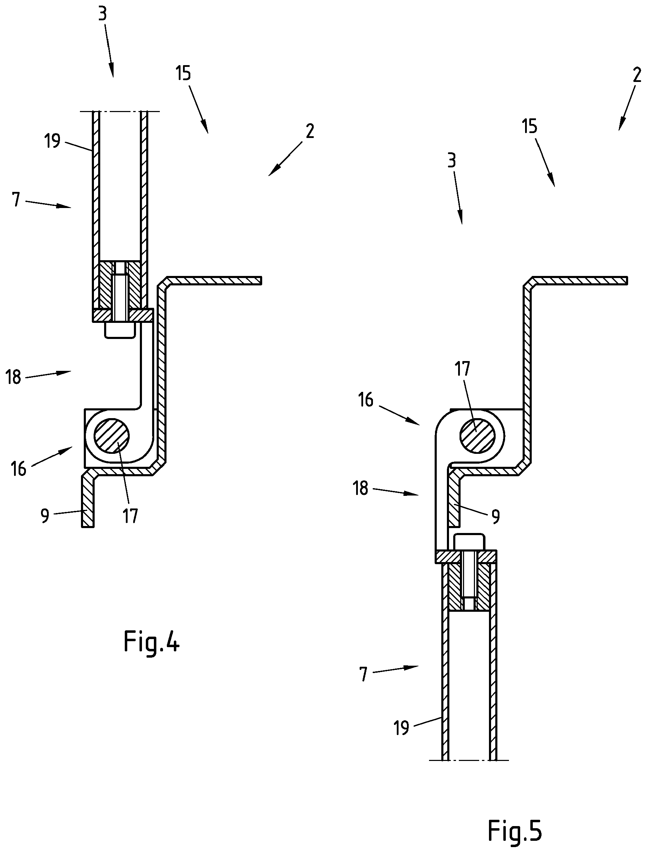

In den Fig. 4 und 5 ist ein Bordwandelement 7 der unteren Reihe von Bordwandelementen 7 in einer Schnittansicht dargestellt, und zwar einmal in der geschlossenen und einmal in der geöffneten Stellung. In der geöffneten Stellung hängt das Bordwandelement 7 im Wesentlichen vertikal nach unten und ist in diese Richtung gegenüber der geschlossenen Stellung im Wesentlichen um 180° geschwenkt. Das Bordwandelement 7 ist an Verbindungsabschnitten 16 über Schwenkverbindungen 17 in Form von Scharnieren mit der Tragstruktur 9 in Form eines Längsprofils des Ladebodens verbunden. Die Verbindungsabschnitte 16 sind dabei an einer nach oben weisenden Seite der Tragstruktur 9 angeordnet und stehen zur Außenseite des Nutzfahrzeugs 1 nicht gegenüber der Tragstruktur 9 vor. Dem Verbindungsabschnitt 16 schließt sich ein Aufnahmeabschnitt 18 an, der ähnlich einer nach außen offenen Nut ausgebildet ist. Der Aufnahmeabschnitt 18 geht zudem auf der dem Verbindungsabschnitt 11 abgewandten Seite über in einen Bordwandabschnitt 19.

Beim Verschwenken des Bordwandelements 7 aus der geöffneten Stellung in die geschlossene Stellung greift die Tragstruktur 9 teilweise in die durch den Aufnahmeabschnitt 18 gebildete Aussparung bzw. Nut ein, so dass das Bordwandelement 7 die Tragstruktur 9 dort in der geöffneten Stellung wenigstens teilweise umgreift. Dazu ist die nach außen weisende Vorderseite des Aufnahmeabschnitts 18 des Bordwandelements 7 in der geschlossenen Stellung gegenüber dem Bordwandabschnitt 19 des Bordwandelements in Richtung des Laderaums 15 zurückversetzt, und zwar in Form einer Nut oder einer Aussparung.

Der Bordwandabschnitt 19 des dargestellten und insoweit bevorzugten Aufbaus 2 weist eine etwa ebene und nach außen weisende Vorderseite auf. Diese Vorderseite definiert in der geschlossenen Stellung eine äußere vertikale Ebene in Längsrichtung des Aufbaus 2, die vorzugsweise etwa bündig ist mit der entsprechenden durch die Bordwand 3 als solcher bei geschlossenen Bordwandelementen 7 definierten äußeren Ebene. Zwischen einer dieser Ebenen und der in der geschlossenen Stellung nach außen weisenden Vorderseite des Aufnahmeabschnitts 18 ist ein Freiraum vorhanden, in dem die Tragstruktur 9 in der geöffneten Stellung wenigstens teilweise aufgenommen werden kann.

Während die nach außen weisende Vorderseite des Bordwandelements 7 in der geschlossenen Stellung nicht nach außen gegenüber der nach außen weisenden Seite der zugehörigen Tragstruktur 9 vorsteht, steht die Rückseite des Bordwandelements 7 in der geöffneten Stellung gegenüber der nach außen weisenden Vorderseite der Tragstruktur 9 nach außen vor. Gleichzeitig steht jedoch die in der geschlossenen Stellung nach außen weisende Vorderseite des Bordwandelements 7 gegenüber der nach außen weisenden Seite der zugehörigen Tragstruktur 9 in der geöffneten Stellung nach innen in Richtung des Laderaums 15 vor.

Nicht im Einzelnen dargestellt ist, dass die Stirnwand 4 und/oder die Rückwand 5 ebenfalls Bordwände 3 mit wenigstens einem Bordwandelement 7,8 und mit wenigstens einer Tragstruktur 9,10 jeweils der zuvor beschriebenen Art bilden können. Die grundsätzlichen zuvor beschriebenen Prinzipien gelten dann vorzugsweise auch für die Quer zum Aufbau 2 ausgerichteten Bordwände 3.

## Patentansprüche

1. Aufbau (2) eines Nutzfahrzeugs (1), insbesondere Lastkraftwagens, Anhängers oder Sattelaufliegers, mit wenigstens einer eine Seitenwand bildenden Bordwand (3), wobei die Bordwand (3) wenigstens eine Tragstruktur (9,10) und wenigstens ein über wenigstens eine genau eine Schwenkachse definierende Schwenkverbindung (12) an der Tragstruktur (9,10) festgelegtes Bordwandelement (7,8) umfasst, wobei das Bordwandelement (7,8) um die eine Schwenkachse von einer geschlossenen Stellung gegenüber der Tragstruktur (9,10) in eine geöffnete Stellung verschwenkt werden kann,
**dadurch gekennzeichnet, dass** in der geöffneten Stellung des Bordwandelements (7,8) das Bordwandelement (7,8) die Tragstruktur (9,10) wenigstens teilweise umgreift.

2. Aufbau nach Anspruch 1,
**dadurch gekennzeichnet, dass** das Bordwandelement (7,8) einen mit der Tragstruktur (9,10) verbundenen Verbindungsabschnitt (11,16), einen Bordwandabschnitt (14,19) und dazwischen einen Aufnahmeabschnitt (13,18) aufweist, dass die im geschlossenen Zustand des Bordwandelements (7,8) zur Außenseite des Nutzfahrzeug (1) weisenden Vorderseite des Aufnahmeabschnitts (13,18) gegenüber der Außenseite des Bordwandelements (7,8) und/oder gegenüber der zur Außenseite des Nutzfahrzeugs (1) weisende Vorderseite des Bordwandabschnitts (14,19) zurückversetzt ist und dass in der geöffneten Stellung des Bordwandelements (7,8) das Bordwandelement (7,8) die Tragstruktur (9,10) im Bereich des Aufnahmeabschnitts (13,18) wenigstens teilweise umgreift.

3. Aufbau nach Anspruch 2,
**dadurch gekennzeichnet, dass**
der Aufnahmeabschnitt (13,18) des Bordwandelements (7,8) als Verjüngung und/oder Aussparung, insbesondere als im geschlossenen Zustand des Bordwandelements (7,8) nach außen offene Nut, ausgebildet ist.

4. Aufbau nach einem der Ansprüche 1 bis 3,
**dadurch gekennzeichnet, dass**
in der geschlossenen Stellung des Bordwandelements (7,8) die Tragstruktur (9,10) gegenüber der zum Laderaum (15) des Nutzfahrzeugs (1) weisenden Rückseite des Bordwandelements (7,8) zur Außenseite des Nutzfahrzeugs (1) vorsteht.

5. Aufbau nach einem der Ansprüche 1 bis 4,
**dadurch gekennzeichnet, dass**
das Bordwandelement (7,8) in der geschlossenen Stellung nicht gegenüber der Außenseite der Tragstruktur (9,10) nach außen vorsteht, vorzugsweise etwa bündig mit der Tragstruktur (9,10) abschließt.

6. Aufbau nach einem der Ansprüche 1 bis 5,
**dadurch gekennzeichnet, dass**
in der geöffneten Stellung des Bordwandelements (7,8) die Tragstruktur (9,10) gegenüber der zum Laderaum (15) des Nutzfahrzeugs (1) weisenden Vorderseite der Bordwand (3) zur Außenseite des Nutzfahrzeugs (1) vorsteht.

7. Aufbau nach einem der Ansprüche 1 bis 6,
**dadurch gekennzeichnet, dass**
das Bordwandelement (7,8) aus der geschlossenen Stellung um wenigstens 150°, vorzugsweise wenigstens 160°, insbesondere wenigstens 170°, weiter vorzugsweise etwa 180°, in die geöffnete Stellung verschwenkt werden kann.

8. Aufbau nach einem der Ansprüche 1 bis 7,
**dadurch gekennzeichnet, dass**
das Bordwandelement (7,8) aus der geschlossenen Stellung in die geöffnete Stellung nach unten und/oder zu Seite geschwenkt wird.

9. Aufbau nach einem der Ansprüche 1 bis 8,
**dadurch gekennzeichnet, dass**
das Bordwandelement (7,8), insbesondere der Verbindungsabschnitt (11,16), mit einer im Wesentlichen in Längsrichtung der Bordwand (3) und/oder einer im Wesentlichen nach oben weisenden Seite der Tragstruktur (9,10) verbunden ist.

10. Aufbau nach einem der Ansprüche 1 bis 9,
**dadurch gekennzeichnet, dass**
das Bordwandelement (7,8) über wenigstens eine Schwenkverbindung (12,17), insbesondere wenigstens ein Scharnier mit der Tragstruktur (9,10) verbunden ist.

11. Aufbau nach einem der Ansprüche 1 bis 10,
**dadurch gekennzeichnet, dass**
die Tragstruktur (9,10) eine Runge, der Ladeboden und/oder ein Längsprofil, insbesondere am seitlichen Rand des Ladebodens, ist.

12. Aufbau nach einem der Ansprüche 1 bis 11,
**dadurch gekennzeichnet, dass**
der Aufbau (2) ein Pritschenaufbau, insbesondere ein offener Pritschenaufbau ist.

## Claims

1. Body (2) of a commercial vehicle (1), in particular of a lorry, of a trailer or of a semi-trailer, having at least one sideboard (3) forming a side wall, wherein the sideboard (3) comprises at least one supporting structure (9, 10) and at least one sideboard element (7, 8) which is fixed to the supporting structure (9, 10) by means of at least one pivot connection (12) defining exactly one pivot axis, wherein the sideboard element (7, 8) can be pivoted about the one pivot axis from a closed position in relation to the supporting structure (9, 10) into an open position, **characterised in that** in the open position of the sideboard element (7, 8) the sideboard element (7, 8) at least partly grips around the supporting structure (9, 10).

2. Body according to Claim 1, **characterised in that** the sideboard element (7, 8) has a connection section (11, 16) connected to the supporting structure (9, 10), a sideboard section (14, 19) and in between a holding section (13, 18), **in that** the front side of the holding section (13, 18) pointing towards the outside of the commercial vehicle (1) in the closed state of the sideboard element (7, 8) is set back in relation to the outside of the sideboard element (7, 8) and/or in relation to the front side of the sideboard section (14, 19) pointing towards the outside of the commercial vehicle (1), and **in that** in the open position of the sideboard element (7, 8) the sideboard element (7, 8) at least partly grips around the supporting structure (9, 10) in the area of the holding section (13, 18).

3. Body according to Claim 2, **characterised in that** the holding section (13, 18) of the sideboard element (7, 8) is formed as a taper and/or recess, in particular as an outwardly open groove in the closed state of the sideboard element (7, 8).

4. Body according to any one of Claims 1 to 3, **characterised in that** in the closed position of the sideboard element (7, 8) the supporting structure (9, 10) protrudes to the outside of the commercial vehicle (1) in relation to the rear side of the sideboard element (7, 8) pointing towards the load area (15) of the commercial vehicle (1).

5. Body according to any one of Claims 1 to 4, **characterised in that** the sideboard element (7, 8) in the closed position does not protrude outwards in relation to the outside of the supporting structure (9, 10), preferably it is approximately flush with the supporting structure (9, 10).

6. Body according to any one of Claims 1 to 5, **characterised in that** in the open position of the sideboard element (7, 8) the supporting structure (9, 10) protrudes to the outside of the commercial vehicle (1) in relation to the front side of the sideboard (3) pointing towards the load area (15) of the commercial vehicle (1).

7. Body according to any one of Claims 1 to 6, **characterised in that** the sideboard element (7, 8) can be pivoted from the closed position by at least 150°, preferably by at least 160°, in particular by at least 170°, more preferably by about 180°, into the open position.

8. Body according to any one of Claims 1 to 7, **characterised in that** the sideboard element (7, 8) is pivoted downwards and/or to the side from the closed position into the open position.

9. Body according to any one of Claims 1 to 8, **characterised in that** the sideboard element (7, 8), in particular the connection section (11, 16), is connected to a side of the supporting structure (9, 10) which is essentially pointing in the longitudinal direction of the sideboard (3) and/or which is essentially pointing upwards.

10. Body according to any one of Claims 1 to 9, **characterised in that** the sideboard element (7, 8) is connected to the supporting structure (9, 10) by means of at least one pivot connection (12, 17), in particular by means of at least one hinge.

11. Body according to any one of Claims 1 to 10, **characterised in that** the supporting structure (9, 10) is a stanchion, the load floor and/or a longitudinal section, in particular on the lateral edge of the load floor.

12. Body according to any one of Claims 1 to 11, **characterised in that** the body (2) is a flatbed body, in particular an open flatbed body.

## Revendications

1. Montage (2) d'un véhicule utilitaire (1), en particulier un poids lourd, une remorque ou une semi-remorque, doté d'au moins un hayon (3) formant une paroi latérale, dans lequel le hayon (3) comporte au moins une structure de support (9, 10) et au moins un élément de hayon (7, 8) fixé sur la structure de support (9, 10) par l'intermédiaire d'au moins une liaison pivot (12) définissant exactement un axe de pivotement, où l'élément de hayon (7, 8) peut être déplacé par pivotement autour d'un axe de pivotement à partir d'une position fermée par rapport à la structure de support (9, 10) en une position ouverte, **caractérisé en ce que**, dans la position ouverte de l'élément de hayon (7, 8), l'élément de hayon (7, 8) enveloppe au moins partiellement la structure de support (9, 10).

2. Montage selon la revendication 1, **caractérisé en ce que** l'élément de hayon (7, 8) présente une section de raccordement (11, 16) reliée à la structure de support (9, 10), une section de hayon (14, 19) et, entre les deux, une section de réception (13, 18), que la face avant de la section de réception (13, 18), orientée vers le côté extérieur du véhicule utilitaire (1) dans l'état fermé de l'élément de hayon (7, 8), est décalée par rapport au côté extérieur de l'élément de hayon (7, 8) et/ou par rapport à la face avant de la section de hayon (14, 19) orientée vers le côté extérieur du véhicule utilitaire (1) et que, dans la position ouverte de l'élément de hayon (7, 8), l'élément de hayon (7, 8) enveloppe au moins partiellement la structure de support (9, 10) dans la partie de la section de réception (13, 18).

3. Montage selon la revendication 2, **caractérisé en ce que** la section de réception (13, 18) de l'élément de hayon (7, 8) est conçue en tant que rétrécissement et/ou évidement, en particulier en tant que rainure ouverte vers l'extérieur dans l'état fermé de l'élément de hayon (7, 8).

4. Montage selon l'une des revendications 1 à 3, **caractérisé en ce que**, dans la position fermée de l'élément de hayon (7, 8), la structure de support (9, 10) fait saillie par rapport à la face arrière de l'élément de hayon (7, 8) orientée vers le compartiment bagages (15) du véhicule utilitaire (1) vers le côté extérieur du véhicule utilitaire (1).

5. Montage selon l'une des revendications 1 à 4, **caractérisé en ce que** l'élément de hayon (7, 8), dans la position fermée, ne fait pas saillie vers l'extérieur par rapport au côté extérieur de la structure de support (9, 10), de préférence il renferme plus ou moins à fleur la structure de support (9, 10).

6. Montage selon l'une des revendications 1 à 5, **caractérisé en ce que**, dans la position ouverte de l'élément de hayon (7, 8), la structure de support (9, 10) fait saillie par rapport à la face avant du hayon (3) orientée vers le compartiment bagages (15) du véhicule utilitaire (1) vers le côté extérieur du véhicule utilitaire (1).

7. Montage selon l'une des revendications 1 à 6, **caractérisé en ce que** l'élément de hayon (7, 8) peut être déplacé par pivotement à partir de la position fermée à hauteur d'au moins 150°, de préférence au moins 160°, en particulier au moins 170°, mieux encore d'environ 180°, dans la position ouverte.

8. Montage selon l'une des revendications 1 à 7, **caractérisé en ce que** l'élément de hayon (7, 8) est déplacé par pivotement à partir de la position fermée dans la position ouverte vers le bas et/ou latéralement.

9. Montage selon l'une des revendications 1 à 8, **caractérisé en ce que** l'élément de hayon (7, 8), en particulier la section de raccordement (11, 16), est relié à une face de la structure de support (9, 10), essentiellement dans le sens longitudinal du hayon (3), et/ou à une face de la structure de support (9, 10) orientée essentiellement vers le haut.

10. Montage selon l'une des revendications 1 à 9, **caractérisé en ce que** l'élément de hayon (7, 8) est relié à la structure de support (9, 10) par l'intermédiaire d'au moins une liaison pivot (12, 17), en particulier au moins une charnière.

11. Montage selon l'une des revendications 1 à 10, **caractérisé en ce que** la structure de support (9,10) est un rancher, le plancher de chargement et/ou un profil longitudinal, en particulier sur le bord latéral du plancher de chargement.

12. Montage selon l'une des revendications 1 à 11, **caractérisé en ce que** le montage (2) est une plateforme, en particulier une plateforme ouverte.
